# EUROPÄISCHE PATENTSCHRIFT

(11) **EP 4 139 232 B1**
(45) Veröffentlichungstag und Bekanntmachung des Hinweises auf die Patenterteilung: **03.04.2024**
(21) Anmeldenummer: 21718878.8
(22) Anmeldetag: 15.04.2021
(51) Int. Cl.: B65G 17/16, B65G 17/18, B62D 57/024, B65G 47/96

(54) **NEIGUNGSAUSGLEICHSVORRICHTUNG FÜR EINEN WAGEN EINER FÖRDERVORRICHTUNG**
INCLINATION COMPENSATION DEVICE FOR A CARRIAGE OF A CONVEYOR
DISPOSITIF DE COMPENSATION D'INCLINAISON POUR UN CHARIOT D'UN DISPOSITIF DE TRANSPORT

(30) Priorität: 22.04.2020 EP 20170939
(43) Veröffentlichungstag der Anmeldung: 01.03.2023
(73) Patentinhaber: BEUMER Group GmbH & Co. KG, 59269 Beckum (DE)
(72) Erfinder: MÜLLER, Christian, 58300 Wetter (Ruhr) (DE); DIRKMANN, Markus, 59302 Oelde (DE)
(74) Vertreter: Angerhausen, Christoph
(86) Internationale Anmeldenummer: PCT/EP2021/059773
(87) Internationale Veröffentlichungsnummer: WO 2021/213885

(56) Entgegenhaltungen:
- WO-A1-2004/078624
- GB-A- 133 126
- GB-A- 2 153 772
- JP-A- H09 156 746
- KR-B1- 101 100 854

## Beschreibung

Die Erfindung betrifft eine Neigungsausgleichsvorrichtung für einen Wagen einer Fördervorrichtung zum waagerechten Transportieren von Fördergut, mit einem Halterahmen und einem darin über eine senkrecht zur Fahrtrichtung angeordnete Schwenkachse gehaltenen Neigungsausgleichselement, ferner mit einem Schwenkantrieb zum Verschwenken des Neigungsausgleichselements gegenüber dem Halterahmen um die Schwenkachse, ferner mit einer die Neigungsausgleichsvorrichtung betreffende Neigungsänderungsbenachrichtigungen erhaltende Schwenkantriebssteuerung, wobei der Schwenkantrieb bei Erhalt eines einer Neigungsänderungsbenachrichtigung entsprechenden Neigungsänderungsbefehls seitens der Schwenkantriebssteuerung so angesteuert ist, dass das Neigungsausgleichselement kontinuierlich in der Waagerechten gehalten ist, wobei über den Schwenkantrieb ein an einem dem Neigungsausgleichselement gegenüberliegenden Ende eines sich von dem Neigungsausgleichselement wegerstreckenden Schwenkhebels befestigtes Antriebselement angetrieben ist, das eine parallel oder senkrecht zur Schwenkachse angeordnete Antriebsachse aufweist, wobei das Antriebselement auf zumindest einer, insbesondere äquidistant zur Schwenkachse verlaufenden, Führung, insbesondere kraft- oder formschlüssig, abrollt, welche am Halterahmen montiert oder ausgebildet ist.

Die GB 133 126 A offenbart eine Neigungsausgleichsvorrichtung für einen Wagen einer Fördervorrichtung zum waagerechten Transportieren von Fördergut, mit einem Halterahmen und einem darin über eine senkrecht zur Fahrtrichtung angeordnete Schwenkachse gehaltenen Neigungsausgleichselement, sowie einen Schwenkantrieb zum Verschwenken des Neigungsausgleichselements gegenüber dem Halterahmen um die Schwenkachse. Die GB 2 153 772 A und die KR 101 100 854 B1 offenbaren jeweils Ausbildungen einer Schwenkeinrichtung. Die WO 2004/078624 A1 offenbart die Nutzung einer Steuerung, um ein variables Kippen einer Tragschale zu ermöglichen.

Die WO 2016/206967 A1 beschreibt eine Fördervorrichtung zum Erzeugen eines Neigungsausgleichs, welche zum Erzeugen eines Niveauausgleichs eine neben der Förderstrecke zusätzliche und vom Förderwagen unabhängige Niveauausgleichsschiene aufweist, deren Abstand zur Förderstrecke für einen jeweiligen steigungsabhängigen Niveauausgleich variiert ist.

Die aus dem Stand der Technik bekannten Neigungsausgleichsvorrichtungen weisen den Nachteil auf, dass das Bereitstellen einer Niveauausgleichsschiene eine aufwendige Konstruktion erfordert und dadurch einerseits das Handling des transportierten Förderguts erschwert und andererseits viel Raum in Anspruch nimmt.

Es ist daher die Aufgabe der Erfindung, eine Neigungsausgleichsvorrichtung für einen Förderwagen derart weiterzuentwickeln, dass diese einen geringeren Konstruktionsaufwand benötigt und mit einer Vielzahl von Förderstrecken kompatibel ist.

Diese Aufgabe wird durch eine Neigungsausgleichsvorrichtung mit den Merkmalen des Anspruchs 1 gelöst. Die abhängigen Ansprüche betreffen jeweils vorteilhafte Ausführungsformen der Erfindung.

Demgemäß ist eine Neigungsausgleichsvorrichtung für einen Wagen einer Fördervorrichtung zum waagerechten Transportieren von Fördergut vorgesehen, mit einem Halterahmen und einem darin über eine senkrecht zur Fahrtrichtung angeordnete Schwenkachse gehaltenen Neigungsausgleichselement.

Mit dem beanspruchten Ausgleichselement wird es ermöglicht, dass beispielsweise ein Sorter beim Transport von Produkten sowohl Steig- aus auch Gefällestrecken fahren kann und dabei das zu transportierende Produkt waagerecht hält. Durch die Lagerung des Neigungsausgleichselements im Halterahmen in einem gemeinsamen Drehpunkt wird eine Rotation des Neigungsausgleichselements gegenüber dem Halterahmen ermöglicht. Da der Halterahmen starr mit einem Förderwagen verbunden ist, erfährt der Halterahmen bei Steigungen und Gefällen der Förderstrecke jeweils entsprechende Neigungsbewegungen. Durch das demgegenüber drehbare Neigungsausgleichselement kann somit ein Ausgleich der Neigung durch entsprechendes Gegensteuern des Schwenkantriebs erfolgen. Es ist denkbar, dass die Neigung des Neigungsausgleichselements sich je nach Steigung oder Gefälle entsprechend anpasst, wobei es vorgesehen sein kann, dass das Neigungsausgleichselement in jeder möglichen Zwischenpositionen anhaltbar ist. Ferner kann vorgesehen sein, dass die Geschwindigkeit, in der die Neigungsausgleichsvorrichtung den Neigungsausgleich vornimmt, einstellbar ist. Der Drehpunkt bzw. die Schwenkachse des Neigungsausgleichselements kann mittig angeordnet sein, es ist jedoch alternativ möglich, dass dieser auch außermittig angeordnet sein kann.

Das Neigungsausgleichselement kann eine oberhalb der Schwenkachse liegende Oberfläche aufweisen. Ferner kann sich das Neigungsausgleichselement zumindest von der Schwenkachse bis zur Antriebsachse erstrecken. Der Schwenkhebel entspricht somit insbesondere dem Abschnitt des Neigungsausgleichselements, der dem Abstand zwischen der Schwenkachse und der Antriebsachse entspricht.

Insbesondere kann der Halterahmen zwei Haltearme aufweisen, zwischen welchen das Neigungsausgleichselement gehalten ist, wobei der Schwenkhebel zwischen den Haltearmen angeordnet sein kann und die Führung an zumindest einem der Haltearme montiert oder ausgebildet sein kann. Insbesondere kann der Schwenkhebel mittig zwischen den Haltearmen angeordnet sein.

Beispielsweise können zwei, insbesondere gegenüberliegende, durch die Antriebsachse angetriebene Antriebselemente vorgesehen sein, welche auf zwei gegenüberliegenden, insbesondere jeweils äquidistant zur Schwenkachse verlaufenden Führungen kraft- oder formschlüssig abrollen, welche an den zwei gegenüberliegenden Haltearmen montiert oder ausgebildet sein können. Die Führungen können als Abrollbahn und/oder als Antriebsbahn ausgebildet sein.

Dabei kann das Antriebselement ein auf der Antriebsachse montiertes Zahnritzel sein und die Führung eine äquidistant zur Schwenkachse verlaufende, gebogene Zahnstange aufweisen, in welche das Zahnritzel eingreift. Im Sinne einer kinematischen Umkehr kann gleichermaßen eine Zahnstange am Neigungsausgleichselement angeordnet, sein, welche durch ein am Halterahmen befestigtes Antriebsmittel, insbesondere ein Zahnrad/-ritzel, angetrieben werden kann. Alternativ kann vorgesehen sein, dass der Schwenkantrieb pneumatisch betrieben wird. Weiterhin alternativ kann vorgesehen sein, dass der Schwenkantrieb einen Linearantrieb oder einen Spindelantrieb aufweist.

Ferner kann die Führung eine an die Zahnstange angrenzende Führungsnut aufweisen, in welcher ein an die Zähne des Zahnritzels angrenzender glatter Wellenabschnitt geführt ist. Die Führungsnut erfüllt insbesondere den Zweck, ein Herausspringen des Zahnritzels aus der Zahnstange zu unterbinden, welches bei dynamischen Fahrsituationen, hervorgerufen durch Lastwechsel bei Kurven oder Steigungen beziehungsweise Gefälleabschnitten sowie durch den Transport großer Lasten auftreten könnte. Die Führungsnut begrenzt außerdem den Verfahrweg des Zahnritzels in seitlicher Richtung, so dass ein Überfahren der Zahnstange ebenfalls vermieden wird, während ohne eine solche Begrenzung das Ritzel gegebenenfalls nicht mehr in Eingriff mit der Zahnstange kommen könnte.

Der Schwenkantrieb kann insbesondere einen Elektromotor und ein Getriebe aufweisen, welche am Neigungsausgleichselement befestigt sind und über welche die Antriebsachse angetrieben ist. Das Getriebe kann insbesondere selbsthemmend ausgebildet sein. Ferner kann das Getriebe ein, insbesondere selbsthemmendes, Schneckengetriebe sein. Dadurch kann über den Motor und das Getriebe das oder die Antriebsmittel, insbesondere das oder die Zahnritzel, angetrieben werden, welche auf der oder den entsprechenden Führung/en, insbesondere auf der Zahnstange, laufen und damit das Schwenken des Neigungsausgleichselements ermöglichen.

Dabei kann der Schwenkantrieb am oder im Neigungsausgleichselement montiert sein. Insbesondere können der Elektromotor sowie das Getriebe im Inneren des Neigungsausgleichselements angeordnet sein. Die Neigungserkennungseinheit kann insbesondere unmittelbar neben der Schwenkachse am Neigungsausgleichselement befestigt sein. Besonders bevorzugt ist die Neigungserkennungseinheit direkt unterhalb der Schwenkachse angeordnet.

Es kann vorgesehen sein, dass die Schwenkantriebssteuerung die Neigungsänderungsbenachrichtigungen von einer Neigungsänderungsbenachrichtigungseinheit erhält. Die Benachrichtigung kann in der Schwenkantriebssteuerung gespeichert sein oder von der zentralen Steuerung der Fördervorrichtung erhalten werden. Beispielsweise kann vorgesehen sein, dass die aktuelle Neigung basierend auf einem Positionsmodell übermittelt wird. In dem Positionsmodell können sämtliche Steigungen und Gefälle von jeder möglichen Position des Förderers bekannt sein. Das Positionsmodell kann in der zentralen Steuerung oder der Schwenkantriebssteuerung gespeichert sein. Alternativ ist denkbar, dass die Neigungsausgleichsvorrichtung die Neigungsänderungsbenachrichtigungen beim Durchfahren von Lichtschranken erhält, sodass dadurch ein entsprechender Neigungsausgleich getriggert wird. Ferner kann vorgesehen sein, dass die Neigungsvorrichtung die Neigungsänderungsbenachrichtigungen durch Infrarotsensoren oder durch definierte Lochraster im Rahmen erhält.

Es kann vorgesehen sein, dass die Neigungsänderungsbenachrichtigungseinheit ein Neigungssensor ist, welcher an der Neigungsausgleichsvorrichtung oder an einem die Neigungsausgleichsvorrichtung aufweisenden Förderwagen befestigt ist. Alternativ kann die Schwenkantriebssteuerung eine Speichereinheit aufweisen, in welcher spezifische die Förderstrecke betreffende Neigungsänderungsinformationen gespeichert sind. Weiterhin alternativ kann die Schwenkantriebssteuerung einer Steuereinheit der Fördervorrichtung untergeordnet sein, von welcher die Schwenkantriebssteuerung kontinuierlich Neigungsänderungsbenachrichtigungen erhält.

Ferner kann vorgesehen sein, dass die Neigungsänderungsbenachrichtigungseinheit als Lichtschranke ausgebildet ist, bei deren Durchfahren ein Neigungsänderungsbefehl ausgelöst ist. Die Fördervorrichtung kann eine Förderstrecke und zumindest einen Förderwagen mit einer Neigungsausgleichsvorrichtung aufweisen, wobei jeweils zumindest eine Lichtschranke in Förderrichtung vor einem Streckenabschnitt mit geänderter Neigung angeordnet sein kann.

Die Schwenkantriebssteuerung kann bei Erhalt einer Neigungsänderungsinformation durch die Neigungserkennungseinheit einen entsprechenden entgegengesetzten Neigungsänderungsbefehl an den Schwenkantrieb ausgeben, durch welchen das zumindest eine Antriebselement um eine der Neigungsänderungsinformation entsprechende Strecke auf der zumindest einen Führung verfahren ist. Enthält die Neigungsänderungsinformation den Hinweis, dass der Wagen einen Anstieg befahren hat, und sich der Halterahmen dadurch gegen den Uhrzeigersinn gegenüber der Waagerechten dreht, bewirkt der Neigungsänderungsbefehl ein Verfahren des Schwenkantriebs dermaßen, dass sich das Neigungsausgleichselement um denselben, jedoch entgegengesetzten, Winkel, also im Uhrzeigersinn, dreht, so dass das Neigungsausgleichselement stets in einer waagerechten Position verbleibt.

Ferner können die Haltearme zwei zueinander fluchtende Buchsen aufweisen, in welchen die am Neigungsausgleichselement angeordnete Schwenkachse drehbar gelagert ist. In den Buchsen können beispielsweise Gleitlager aufgenommen sein. Das Neigungsausgleichselement kann zur Realisierung der Schwenkachse zwei Achszapfen aufweisen, welche in die in den Buchsen aufgenommenen Gleitlager eingreifen können. Alternativ kann die Lagerung umgekehrt erfolgen, so dass das Neigungsausgleichselement Buchsen aufweist und die Haltearme entsprechende Achszapfen.

Dabei können die Haltearme so über Verbindungsabschnitte aneinander gekoppelt sein, dass das Neigungsausgleichselement zwischen den Haltearmen frei verschwenkbar ist. Die Verbindungsabschnitte können integral mit den Haltearmen ausgebildet sein. Die Verbindungsabschnitte können insbesondere in einem Fußbereich des Halterahmens die beiden gegenüberliegenden Haltearme miteinander verbinden. Dabei können die Haltearme mitsamt der in den Haltearmen angeordneten Position für die Schwenkachse den oder die Verbindungsabschnitte so überragen, dass das Neigungsausgleichselement frei verschwenkt werden kann, ohne in Eingriff mit dem Halterahmen, insbesondere den Verbindungsabschnitten zu gelangen. Insbesondere können die Haltearme jeweils als Gussteile ausgebildet sein, an welchen jeweils ein Teilverbindungsabschnitt angeformt ist. Zum Verbinden der gegenüberliegenden Rahmenhälften können dann die Verbindungsabschnitte miteinander verschweißt werden.

Der Halterahmen kann eine Mehrzahl Standfüße aufweisen, über welche die Neigungsausgleichsvorrichtung auf einem Förderwagen befestigbar ist. Vorzugsweise sind unterhalb jedes Haltearms zwei Standfüße angeordnet. Die Standfüße können integral mit dem jeweiligen Haltearm ausgebildet sein. Die Standfüße können auch integral mit dem dem jeweiligen Haltearm zugeordneten Verbindungsabschnitt ausgebildet sein.

Das Neigungsausgleichselement kann an seiner Oberseite eine zumindest abschnittsweise ebene Oberfläche aufweisen. Im normalen Fahrbetrieb der Fördervorrichtung kann dieser Oberfläche waagerecht ausgerichtet sein.

Außerdem kann das Neigungsausgleichselement an seiner Oberseite Auskragungen zum Befestigen von Anschlusselementen aufweisen. Es können insbesondere zwei Auskragungen vorgesehen sein, wobei eine in Fahrtrichtung nach vorn und die andere nach hinten weist. Die Auskragungen können jeweils an der oberen Kante des Neigungsausgleichselements angeordnet sein und Teil der zumindest abschnittsweise ebenen Oberfläche sein.

Der Schwenkhebel kann insbesondere integral mit dem Neigungsausgleichselement ausgebildet sein. Dabei kann das Neigungsausgleichselement, das im oberen Bereich die ebene Plattform ausbildet, sich nach unten hin verjüngen. Im Innenraum des Neigungsausgleichselements können der Elektromotor und das Getriebe als Elemente des Schwenkantriebs aufgenommen und miteinander verbunden sein. Der Schwenkantrieb kann dabei insbesondere zumindest an der Schwenkachse befestigt und an der Antriebsachse befestigt sein.

Beispielhafte Ausführungsformen der Erfindung werden anhand der nachfolgenden Figuren erläutert. Dabei zeigt:
- Fig.1: eine Seitenansicht einer Ausführungsform der Neigungsausgleichsvorrichtung;
- Fig. 2: eine Frontalansicht der Ausführungsform der Neigungsausgleichsvorrichtung gemäß Figur 1;
- Fig. 3: eine perspektivische Ansicht der Ausführungsform der Neigungsausgleichsvorrichtung gemäß Figur 1;
- Fig. 4: eine Seitenansicht einer die erfindungsgemäße Neigungsausgleichsvorrichtung aufweisenden Fördervorrichtung.

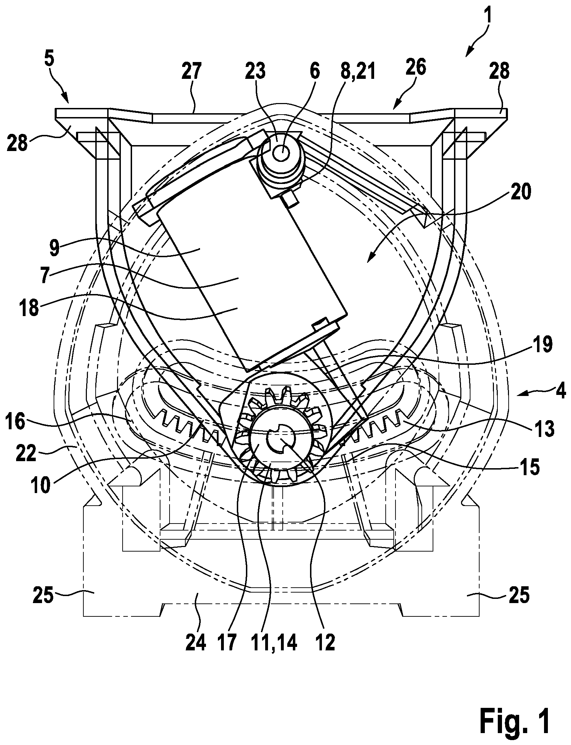

Die in Figur 1 dargestellte Neigungsausgleichsvorrichtung 1 weist einen Halterahmen 4 sowie ein Neigungsausgleichselement 5 auf, welches über eine Schwenkachse 6 verschwenkbar im Halterahmen 4 gelagert und gehalten ist. Das Neigungsausgleichselement 5 weist dazu Achszapfen auf, welche in entsprechende im Halterahmen 4 ausgebildete Buchsen 23 eingreifen, in welchen beispielsweise Gleitlager aufgenommen sind. Zum Verschwenken des Neigungsausgleichselements 5 ist im Innenraum 20 des Neigungsausgleichselements 5 ein Schwenkantrieb 7 aufgenommen, welcher zum einen an der Schwenkachse 6 befestigt und zum anderen an der darunter angeordneten Antriebsachse 12 befestigt ist. Die über den Schwenkantrieb 7 angetriebene Antriebsachse 12 weist an ihren Enden jeweils ein Zahnritzel 14 auf, die durch die Antriebsachse 12 angetrieben werden und jeweils auf Zahnstange 15 abrollen. Die Zahnstangen 15 weisen eine gebogene Form auf, welche bewirkt, dass die Zahnstangen äquidistant zur Schwenkachse 6 verlaufen. Die Zahnstangen 15 sind fluchtend gegenüberliegend aufeinander zuweisend in beiden Haltearmen 22 ausgebildet. Zu den Außenseiten der Haltearme 22 weisend sind jeweils an die Zahnstange 15 angrenzend Führungsnuten 16 ausgebildet, in welchen jeweils ein an die Zahnritzel 12 angrenzender glatter Wellenabschnitt 17 geführt ist. Dabei sind die Führungsnuten 16 jeweils als Durchbrüche durch die Haltearme 22 ausgebildet. Durch Antreiben der Antriebsachse 12 kann die Winkellage des Neigungsausgleichselements 5 gegenüber dem Halterahmen 4 variiert werden, in dem das Zahnritzel 14 nach links oder nach rechts auf der Zahnstange 15 Verfahren wird. Dieser Effekt erlaubt es der Vorrichtung, Steigungen oder Gefällestrecken zu befahren und dabei das Neigungsausgleichselement 5 in einer waagerechten Position zu halten. Im dargestellten Ausführungsbeispiel weist das Neigungsausgleichselement 5 eine ebene Oberfläche 27 auf, welche im normalen Fahrbetrieb in einer waagerechten Position gehalten wird. An der Oberseite 26 des Neigungsausgleichselements 5 sind in der Verlängerung der ebenen Oberfläche 27 front- und rückseitig in Fahrtrichtung Auskragungen 28 ausgebildet. Diese dienen insbesondere zum Montieren von Anschlusselementen wie Transportvorrichtungen. Der Halterahmen 4 kann dabei über die vier dargestellten Standfüße 25 auf einem Förderwagen starr montiert werden, so dass sämtliche Winkeländerungen der befahrenen Strecke eins zu eins an den Halterahmen 4 übertragen werden. Zum Erkennen der jeweiligen Neigungsänderung weist das Neigungsausgleichselement 5 eine Neigungserkennungseinheit 21, insbesondere einen Neigungssensor 21 auf, welche unmittelbar unter der Schwenkachse 6 am Neigungsausgleichselement 5 befestigt ist. Bei einer Detektion einer Neigungsänderung sendet der Neigungssensor 21 eine entsprechende Information an eine Schwenkantriebssteuerung 9, welche einen entgegengesetzten Neigungsänderungsbefehl an den Elektromotor 18 weitergibt, welcher diesen Befehl durch Antreiben des Getriebes 19 und damit des Zahnritzels 14 auf der Zahnstange 15 so ausführt, dass das Neigungsausgleichselement 5 konstant in einer waagerechten Position gehalten ist. Der Abstand zwischen Schwenkachse 6 und Antriebsachse 12 kann als Schwenkhebel 10 definiert werden, wobei der Schwenkantrieb 7 zwischen beiden Achsen 6, 12 beziehungsweise im Innenraum 20 des Neigungsausgleichselement 5 fixiert ist.

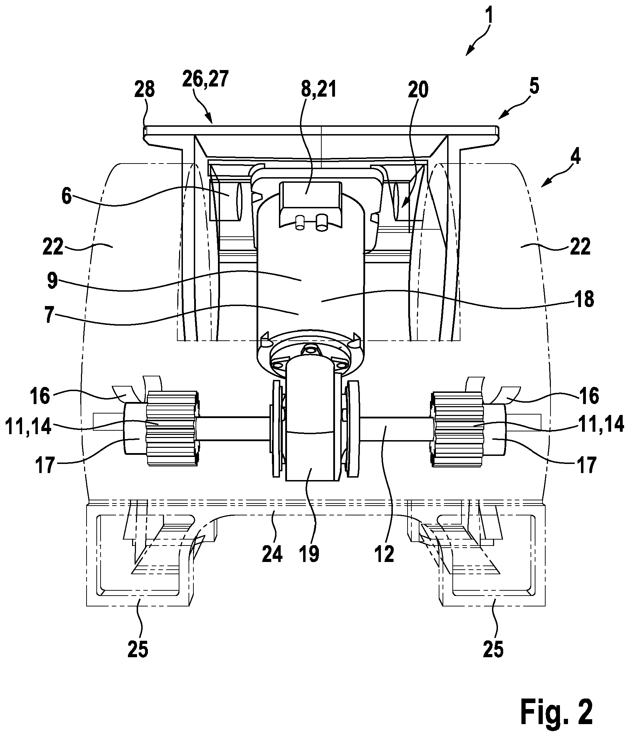

Die in Figur 2 dargestellte Frontansicht der Neigungsausgleichsvorrichtung 1 zeigt insbesondere den Schwenkantrieb 7, welcher sich zwischen der Schwenkachse 6 und der Antriebsachse 12 erstreckt. Es ist zu erkennen, dass der Schwenkantrieb 7 senkrecht zur Antriebsachse 12 ausgerichtet ist. Zum Umleiten der Antriebskraft an das Getriebe 19, das dabei insbesondere als Schneckengetriebe ausgeführt sein kann, erfolgt eine senkrechte Umleitung des Antriebsmoments von der Antriebswelle auf die Abtriebswelle, hier die Antriebsachse 12. Ferner ist das Schneckengetriebe vorzugsweise selbsthemmend ausgeführt, sodass eine Bewegung des Neigungsausgleichselements 5 um die Schwenkachse 6 nicht durch die Gewichtskraft des transportierten Förderguts bewirkt werden kann, sondern nur durch Antreiben des Elektromotors 18. Es ist zu erkennen, dass sich die Antriebsachse 12 von beiden Seiten des Getriebes 19 in Richtung beider Haltearme 22 wegerstreckt. Dort greifen jeweils die mittels der als Zahnritzel 14 ausgebildeten Antriebsmittel 11 in die in den Haltearmen 22 als Zahnstangen 15 ausgebildeten Führungen 13 ein. Die einstückig mit den Zahnritzeln 14 ausgebildeten glatten Wellenabschnitte 17 sind jeweils zur Außenseite der Zahnritzel 14 hin in entsprechenden Führungsnuten 16 geführt, um den Bewegungsspielraum der Zahnritzel 14 insbesondere in Fahrtrichtung und senkrecht zur Fahrtrichtung einzugrenzen. Es ist ferner zu erkennen, dass der Halterahmen 4 zwei seitliche Haltearme 22 aufweist, zwischen welchen das Neigungsausgleichselement 5 verschwenkbar aufgenommen ist, und dass die Haltearme 22 über Verbindungsabschnitte 24 im Fußbereich des Halterahmens 4 miteinander verbunden, beispielsweise miteinander verschweißt, sind. Die vier in den Eckbereichen unter dem Halterahmen 4 angeordneten Standfüße 25 weisen jeweils zumindest ein Rücksprung auf, über welche der Halterahmen auf einem Förderwagen fixiert werden kann.

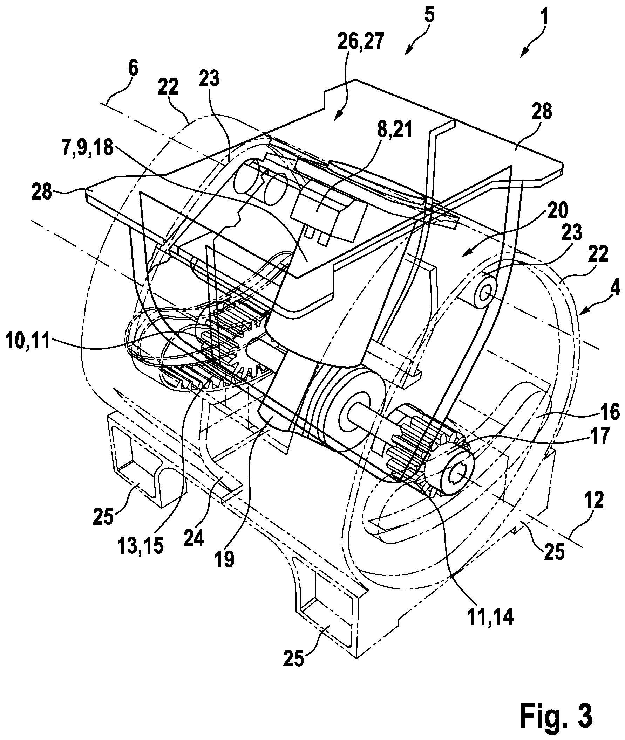

An der perspektivischen Ansicht des Neigungsausgleichsvorrichtung 1 in Figur 3 lässt sich gut erkennen, wie der Verschwenkmechanismus der Vorrichtung realisiert ist. Im Halterahmen 4, der außenseitig die zwei Haltearme 22 aufweist, zwischen denen das Neigungsausgleichselement 5 drehbar gehalten ist und welche über gegenüberliegende Verbindungsabschnitte 24 miteinander verbunden sind, ist das Neigungsausgleichselement 5 frei verschwenkbar, so dass das Neigungselement 5 auch bei Befahren der gesamten Zahnstangenstrecke nicht mit dem Halterahmen 4 kollidiert. Dazu sind die Haltearme 22 nur in einem unteren Bereich des Halterahmens über die Verbindungsabschnitte 24 miteinander verbunden, sodass wie in Figur 3 sichtbar ein Abstand zwischen der Oberkante des Verbindungsabschnitts 24 und der Außenseite des Neigungsausgleichselements 5 freigehalten wird. Zusätzlich weist das Neigungsausgleichselement 5 eine trogförmige Kontur auf, welche oben im Bereich der Oberseite eine zum Aufnehmen von Fördergut oder Anschlusselementen breite Oberfläche 27 aufweist, darunter einen Innenraum 20 für den Schwenkantrieb 7 bereitstellt und sich nach unten hin verjüngt, sodass auch bei starken Steigungen oder Gefällen, in denen sich die Antriebsachse 12 bzw. die Zahnritzel 14 durch entsprechende Detektion durch die Neigungserkennungseinheit 8 und entsprechendes Ansteuern durch den Schwenkantrieb 7 in einer maximalen Randposition auf den Zahnstangen 15 befinden, das Neigungsausgleichselement 5 nicht in Kontakt mit dem Verbindungsabschnitt 24 tritt.

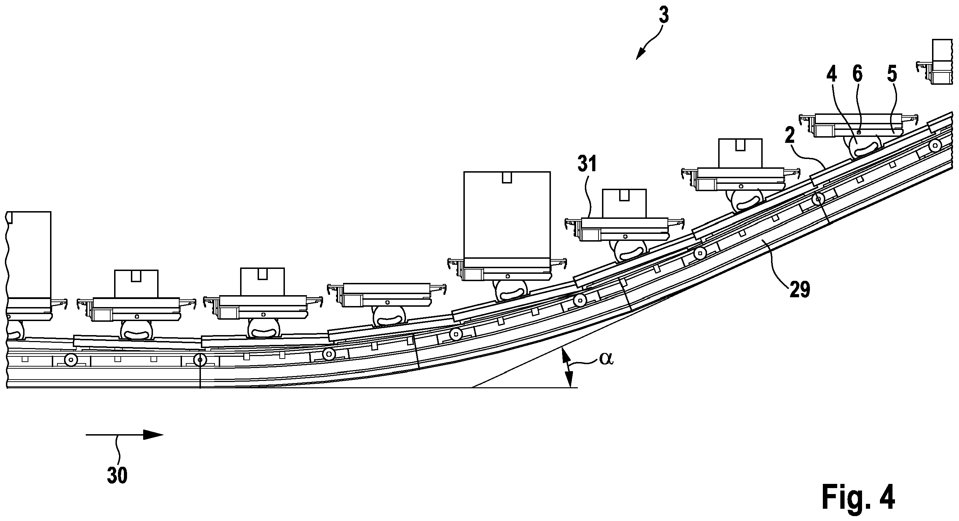

Figur 4 zeigt eine Seitenansicht einer Fördervorrichtung 3, auf der in regelmäßigen Abständen Förderwagen 2 geführt sind, wobei die Förderwagen 2 jeweils eine erfindungsgemäße Neigungsausgleichsvorrichtung 1 aufweisen und wobei auf einigen der dargestellten Wagen Transportgüter befördert werden. Die Förderstrecke 29 geht dabei in Fahrtrichtung 30 von einem waagerechten Streckenabschnitt links in einen eine Steigung aufweisenden Streckenabschnitt rechts über, wobei zu erkennen ist, dass die an die Neigungsausgleichselemente 5 gekoppelten Transportvorrichtungen 31 auf jeder Position der Förderstrecke 29 eine waagerechte Ausrichtung aufweisen. In Abhängigkeit des Steigungswinkels α der Förderstrecke 29 weisen dabei die Neigungsausgleichselemente 5 gegenüber den Halterahmen 4 jeweils einen dem Steigungswinkel α entsprechenden Winkel auf, mit welchem die Neigungsausgleichselement 5 gegenüber dem Halterahmen 4 um die Drehachse 6 verschwenkt sind. Dementsprechend neigen sich die Neigungsausgleichselemente 5 bei Steigungen dem Hang mit entsprechendem Winkel durch Absenken der Vorderseite beziehungsweise Anheben der Rückseite des Neigungsausgleichelements 5 aus ihrer Ausgangslage entgegen. Entsprechend neigen sich die Neigungsausgleichselemente 5 bei Gefällen dem Hang mit entsprechendem Winkel durch Absenken der Rückseite beziehungsweise Anheben der Vorderseite des Neigungsausgleichelements 5 aus ihrer Ausgangslage entgegen. Gleichzeitig verfährt die Antriebsachse 12 bei Befahren einer Steigung entgegen der Fahrtrichtung 30 und bei Befahren eines Gefälles in Fahrtrichtung 30.

## Patentansprüche

1. Neigungsausgleichsvorrichtung (1) für einen Wagen (2) einer Fördervorrichtung (3) zum waagerechten Transportieren von Fördergut,
mit einem Halterahmen (4) und einem darin über eine senkrecht zur Fahrtrichtung (30) angeordnete Schwenkachse (6) gehaltenen Neigungsausgleichselement (5),
ferner mit einem Schwenkantrieb (7) zum Verschwenken des Neigungsausgleichselements (5) gegenüber dem Halterahmen (4) um die Schwenkachse (6),
ferner mit einer die Neigungsausgleichsvorrichtung (1) betreffende Neigungsänderungsbenachrichtigungen erhaltende Schwenkantriebssteuerung (9), wobei der Schwenkantrieb (7) bei Erhalt eines einer Neigungsänderungsbenachrichtigung entsprechenden Neigungsänderungsbefehls seitens der Schwenkantriebssteuerung (9) so angesteuert ist, dass das Neigungsausgleichselement (5) kontinuierlich in der Waagerechten gehalten ist,
wobei über den Schwenkantrieb (7) ein an einem dem Neigungsausgleichselement (5) gegenüberliegenden Ende eines sich von dem Neigungsausgleichselement (5) wegerstreckenden Schwenkhebels (10) befestigtes Antriebselement (11) angetrieben ist, das eine parallel oder senkrecht zu der Schwenkachse (6) angeordnete Antriebsachse (12) aufweist, wobei das Antriebselement (11) auf zumindest einer, insbesondere äquidistant zur Schwenkachse (6) verlaufenden, Führung (13), insbesondere kraft- oder formschlüssig, abrollt, welche am Halterahmen (4) montiert oder ausgebildet ist.

2. Neigungsausgleichsvorrichtung (1) nach Anspruch 1, wobei der Halterahmen (4) zwei Haltearme (22) aufweist, zwischen welchen das Neigungsausgleichselement (5) gehalten ist, wobei der Schwenkhebel (10) zwischen den Haltearmen (22) angeordnet ist und die Führung (13) an zumindest einem der Haltearme (22) montiert oder ausgebildet ist.

3. Neigungsausgleichsvorrichtung (1) nach Anspruch 2, wobei zwei durch die Antriebsachse (12) angetriebene Antriebselemente (11) vorgesehen sind, welche auf zwei gegenüberliegenden, insbesondere jeweils äquidistant zur Schwenkachse (6) verlaufenden, Führungen (13) kraft- oder formschlüssig abrollen, welche an den zwei gegenüberliegenden Haltearmen (22) montiert oder ausgebildet sind.

4. Neigungsausgleichsvorrichtung (1) nach einem der Ansprüche 1 bis 3, wobei das Antriebselement (11) ein auf der Antriebsachse (12) montiertes Zahnritzel (14) ist und die Führung (13) eine äquidistant zur Schwenkachse (6) verlaufende, gebogene Zahnstange (15) aufweist, in welche das Zahnritzel (14) eingreift.

5. Neigungsausgleichsvorrichtung (1) nach Anspruch 4, wobei die Führung (13) eine an die Zahnstange (15) angrenzende Führungsnut (16) aufweist, in welcher ein an die Zähne des Zahnritzels (14) angrenzender glatter Wellenabschnitt (17) geführt ist.

6. Neigungsausgleichsvorrichtung (1) nach einem der Ansprüche 1 bis 5, wobei der Schwenkantrieb (7) pneumatisch betrieben wird oder einen Linearantrieb oder einen Spindelantrieb aufweist.

7. Neigungsausgleichsvorrichtung (1) nach einem der Ansprüche 1 bis 6, wobei der Schwenkantrieb (7) einen Elektromotor (18) und ein Getriebe (19) aufweist, welche am Neigungsausgleichselement (5) befestigt sind und über welche die Antriebsachse (12) angetrieben ist.

8. Neigungsausgleichsvorrichtung (1) nach einem der vorangehenden Ansprüche, wobei der Schwenkantrieb (7) am oder im Neigungsausgleichselement (5) montiert ist.

9. Neigungsausgleichsvorrichtung (1) nach einem der vorangehenden Ansprüche, wobei die Schwenkantriebssteuerung (9) die Neigungsänderungsbenachrichtigungen von einer Neigungsänderungsbenachrichtigungseinheit (21) erhält.

10. Neigungsausgleichsvorrichtung (1) nach Anspruch 9, wobei die Neigungsänderungsbenachrichtigungseinheit (21) ein Neigungssensor ist, welcher an der Neigungsausgleichsvorrichtung (1) oder an einem die Neigungsausgleichsvorrichtung (1) aufweisenden Förderwagen (2) befestigt ist.

11. Neigungsausgleichsvorrichtung (1) nach Anspruch 9, wobei die Neigungsänderungsbenachrichtigungseinheit (21) als Lichtschranke ausgebildet ist, bei deren Durchfahren ein Neigungsänderungsbefehl ausgelöst ist.

12. Neigungsausgleichsvorrichtung nach einem der vorangehenden Ansprüche 1 bis 8, wobei der Neigungsänderungsbefehl durch eine der Schwenkantriebssteuerung (9) übergeordneten Zentralsteuerung der Fördervorrichtung (3) erhalten wird.

13. Neigungsausgleichsvorrichtung (1) nach einem der vorangehenden Ansprüche, wobei die Schwenkantriebssteuerung (9) bei Erhalt einer Neigungsänderungsbenachrichtigung durch die Neigungsänderungsbenachrichtigungseinheit (21) einen entsprechenden entgegengesetzten Neigungsänderungsbefehl an den Schwenkantrieb (7) ausgibt, durch welchen das zumindest eine Antriebselement (11) um eine zur Neigungsänderungsbenachrichtigung korrespondierende Strecke auf der zumindest einen Führung (13) verfahren ist.

14. Neigungsausgleichsvorrichtung (1) nach einem der Ansprüche 2 bis 13, wobei die Haltearme (22) zwei zueinander fluchtende Buchsen (23) aufweisen, in welchen die am Neigungsausgleichselement (5) angeordnete Schwenkachse (6) drehbar gelagert ist.

15. Neigungsausgleichsvorrichtung (1) nach einem der Ansprüche 2 bis 14, wobei die Haltearme (22) so über Verbindungsabschnitte (24) aneinander gekoppelt sind, dass das Neigungsausgleichselement (5) zwischen den Haltearmen (22) frei verschwenkbar ist.

16. Neigungsausgleichsvorrichtung (1) nach einem der vorangehenden Ansprüche, wobei der Halterahmen (4) eine Mehrzahl Standfüße (25) aufweist, über welche die Neigungsausgleichsvorrichtung (1) auf einem Förderwagen (2) befestigbar ist.

## Claims

1. An inclination compensation device (1) for a carriage (2) of a conveying (3) for horizontally transporting conveyed goods,
with a holding frame (4) and an inclination compensation element (5) held therein via a pivot axis (6) arranged perpendicular to the direction of travel (30),
further with a pivot drive (7) for pivoting the inclination compensation element (5) relative to the holding frame (4) about the pivot axis (6),
further with a pivot drive controller (9) receiving inclination change notifications relating to the inclination compensation device (1), wherein the pivot drive (7) is controlled by the pivot drive controller (9) on receipt of an inclination change command corresponding to an inclination change notification such that the inclination compensation element (5) is continuously held horizontally,
wherein a drive element (11) fastened to an end of a pivot lever (10) extending away from the inclination compensation element (5) opposite the inclination compensation element (5) is driven via the pivot drive (7), which drive element has a drive axis (12) arranged parallel or perpendicular to the pivot axis (6), wherein the drive element (11) rolls on at least one guide (13), in particular running equidistantly to the pivot axis (6), in particular in a force-fitting or form-fitting manner, which is mounted or formed on the holding frame (4).

2. The inclination compensation device (1) according to claim 1, wherein the holding frame (4) has two holding arms (22), between which the inclination compensation element (5) is held, wherein the pivot lever (10) is arranged between the holding arms (22) and the guide (13) is mounted or formed on at least one of the holding arms (22).

3. The inclination compensation device (1) according to claim 2, wherein two drive elements (11) driven by the drive axis (12) are provided, which roll on two opposite guides (13), in particular each running equidistantly to the pivot axis (6), in a force-fitting or form-fitting manner, which are mounted or formed on the two opposite holding arms (22).

4. The inclination compensation device (1) according to any one of claims 1 to 3,
wherein the drive element (11) is a toothed pinion (14) mounted on the drive axis (12) and the guide (13) has a curved toothed rack (15) running equidistantly to the pivot axis (6), in which the toothed pinion (14) engages.

5. The inclination compensation device (1) according to claim 4, wherein the guide (13) has a guide groove (16) adjoining the toothed rack (15), in which a smooth shaft section (17) adjoining the teeth of the toothed pinion (14) is guided.

6. The inclination compensation device (1) according to any one of claims 1 to 5,
wherein the pivot drive (7) is operated pneumatically or has a linear drive or a spindle drive.

7. The inclination compensation device (1) according to any one of claims 1 to 6,
wherein the pivot drive (7) has an electric motor (18) and a transmission (19), which are fastened to the inclination compensation element (5) and via which the drive axis (12) is driven.

8. The inclination compensation device (1) according to any one of the preceding claims, wherein the pivot drive (7) is mounted on or in the inclination compensation element (5).

9. The inclination compensation device (1) according to any one of the preceding claims, wherein the pivot drive controller (9) receives the inclination change notifications from an inclination change notification unit (21).

10. The inclination compensation device (1) according to claim 9, wherein the inclination change notification unit (21) is an inclination sensor, which is fastened to the inclination compensation device (1) or to a conveying carriage (2) having the inclination compensation device (1).

11. The inclination compensation device (1) according to claim 9, wherein the inclination change notification unit (21) is formed as a light barrier, during the passage of which an inclination change command is triggered.

12. The inclination compensation device according to any one of the preceding claims 1 to 8, wherein the inclination change command is received by a central controller of the conveying (3) superordinate to the pivot drive controller (9).

13. The inclination compensation device (1) according to any one of the preceding claims, wherein the pivot drive controller (9) outputs a corresponding opposite inclination change command to the pivot drive (7) on receipt of an inclination change notification by the inclination change notification unit (21), by which the at least one drive element (11) is moved on the at least one guide (13) by a distance corresponding to the inclination change notification.

14. The inclination compensation device (1) according to any one of claims 2 to 13, wherein the holding arms (22) have two mutually aligned bushings (23), in which the pivot axis (6) arranged on the inclination compensation element (5) is rotatably mounted.

15. The inclination compensation device (1) according to any one of claims 2 to 14, wherein the holding arms (22) are coupled to one another via connecting sections (24) such that the inclination compensation element (5) is freely pivotable between the holding arms (22).

16. The inclination compensation device (1) according to any one of the preceding claims, wherein the holding frame (4) has a plurality of feet (25), via which the inclination compensation device (1) is fastenable on a conveying carriage (2).

## Revendications

1. Dispositif de compensation d'inclinaison (1) pour un chariot (2) d'un dispositif de convoyage (3) pour le transport horizontal de marchandises à convoyer,
avec un châssis de maintien (4) et un élément de compensation d'inclinaison (5) maintenu à l'intérieur de celui-ci par l'intermédiaire d'un axe de pivotement (6) perpendiculaire au sens de la marche (30),
en outre avec un entraînement de pivotement (7) pour le pivotement de l'élément de compensation d'inclinaison (5) par rapport au châssis de maintien (4) autour de l'axe de pivotement (6),
en outre avec une commande d'entraînement de pivotement (9) recevant des notifications de variation d'inclinaison concernant le dispositif de compensation d'inclinaison (1), dans lequel l'entraînement de pivotement (7), lors de la réception d'une instruction de variation d'inclinaison, provenant de la commande d'entraînement de pivotement (9), correspondant à une notification de variation d'inclinaison, est contrôlé de sorte que l'élément de variation d'inclinaison (5) est maintenu en permanence à l'horizontale,
dans lequel, par l'intermédiaire de l'entraînement de pivotement (7), une extrémité, opposée à l'élément de variation d'inclinaison (5), d'un élément d'entraînement (11), fixé à un levier de pivotement (10) s'éloignant de l'élément de compensation d'inclinaison (5), est entraînée, qui comprend un axe d'entraînement (12) disposé parallèlement ou perpendiculairement à l'axe de pivotement (6), dans lequel l'élément d'entraînement (11) roule, plus particulièrement par force ou par complémentarité de forme, sur au moins un guidage (13), plus particulièrement équidistant par rapport à l'axe de pivotement (6), qui est monté ou réalisé sur le châssis de maintien (4).

2. Dispositif de compensation d'inclinaison (1) selon la revendication 1, dans lequel le châssis de maintien (4) comprend deux bras de maintien (22) entre lesquels l'élément de compensation d'inclinaison (5) est maintenu, dans lequel le levier de pivotement (10) est disposé entre les bras de maintien (22) et le guidage (13) est monté ou réalisé sur au moins un des bras de maintien (22).

3. Dispositif de compensation d'inclinaison (1) selon la revendication 2, dans lequel des éléments d'entraînement (11) entraînés par l'axe d'entraînement (12) sont prévus, qui roulent par force ou par complémentarité de forme sur deux guidages (13) opposés, plus particulièrement de manière équidistante par rapport à l'axe de pivotement (6), qui sont montés ou réalisés sur les deux bras de maintien (22) opposés.

4. Dispositif de compensation d'inclinaison (1) selon l'une des revendications 1 à 3, dans lequel l'élément d'entraînement (11) est un pignon (14) monté sur l'axe d'entraînement (12) et le guidage (13) comprend une crémaillère incurvée (15) s'étendant de manière équidistante par rapport à l'axe de pivotement (6), dans laquelle s'emboîte le pignon (14).

5. Dispositif de compensation d'inclinaison (1) selon la revendication 4, dans lequel le guidage (13) comprend une rainure de guidage (16), adjacente à la crémaillère (15), dans laquelle une portion d'arbre lisse (17) adjacente aux dents du pignon (14) est guidée.

6. Dispositif de compensation d'inclinaison (1) selon l'une des revendications 1 à 5, dans lequel l'entraînement de pivotement (7) fonctionne de manière pneumatique ou comprend un entraînement linéaire ou un entraînement à broche.

7. Dispositif de compensation d'inclinaison (1) selon l'une des revendications 1 à 6, dans lequel l'entraînement de pivotement (7) comprend un moteur électrique (18) et une transmission (19) qui est fixée à l'élément de compensation d'inclinaison (5) et par l'intermédiaire de laquelle l'axe d'entraînement (12) est entraîné.

8. Dispositif de compensation d'inclinaison (1) selon l'une des revendications précédentes, dans lequel l'entraînement de pivotement (7) est monté sur ou dans l'élément de compensation d'inclinaison (5).

9. Dispositif de compensation d'inclinaison (1) selon l'une des revendications précédentes, dans lequel la commande d'entraînement de pivotement (9) reçoit les notifications de variation d'inclinaison en provenance d'une unité de notification de variation d'inclinaison (21).

10. Dispositif de compensation d'inclinaison (1) selon la revendication 9, dans lequel l'unité de notification de variation d'inclinaison (21) est un capteur d'inclinaison qui est fixé au dispositif de compensation d'inclinaison (1) ou à un chariot de convoyage (2) comprenant le dispositif de compensation d'inclinaison (1).

11. Dispositif de compensation d'inclinaison (1) selon la revendication 9, dans lequel l'unité de notification de variation d'inclinaison (21) est conçue comme une barrière photoélectrique qui émet une instruction de variation d'inclinaison lorsqu'elle est traversée.

12. Dispositif de compensation d'inclinaison (1) selon l'une des revendications précédentes 1 à 8, dans lequel l'instruction de variation d'inclinaison est reçue par une commande centrale du dispositif de convoyage (3), prioritaire par rapport à la commande d'entraînement de pivotement (9).

13. Dispositif de compensation d'inclinaison (1) selon l'une des revendications précédentes, dans lequel la commande d'entraînement de pivotement (9), lors de la réception d'une notification de variation d'inclinaison par l'unité de notification de variation d'inclinaison (21), envoie une instruction de variation d'inclinaison opposée correspondante à l'entraînement de pivotement (7), à l'aide duquel l'au moins un élément d'entraînement (11) est déplacé sur un trajet correspondant à la notification de variation d'inclinaison sur l'au moins un guidage (13).

14. Dispositif de compensation d'inclinaison (1) selon l'une des revendications 2 à 13, dans lequel les bras de maintien (22) comprennent deux douilles (23) alignées entre elles, dans lesquelles l'axe de pivotement (6) disposé sur l'élément de compensation d'inclinaison (5) est logé de manière rotative.

15. Dispositif de compensation d'inclinaison (1) selon l'une des revendications 2 à 14, dans lequel les bras de maintien (22) sont couplés entre eux par l'intermédiaire de portions de liaison (24) de sorte que l'élément de compensation d'inclinaison (5) peut être pivoté librement entre les bras de maintien (22).

16. Dispositif de compensation d'inclinaison (1) selon l'une des revendications précédentes, dans lequel le châssis de maintien (4) comprend une pluralité de pieds (25) par l'intermédiaire desquels le dispositif de compensation d'inclinaison (1) peut être fixé sur un chariot de convoyage (2).
